# EUROPEAN PATENT APPLICATION

(11) **EP 1 138 199 A2**
(43) Date of publication of application: **04.10.2001**
(21) Application number: 01106482.1
(22) Date of filing: 26.03.2001
(51) Int. Cl.: A01M 1/04, A01M 1/22

(54) **An insect trap**

(30) Priority: 31.03.2000 IT PD000027 U
(71) Applicant: Marcato, Antonio, 06320 La Turbie (FR)
(72) Inventor: Marcato, Antonio, 06320 La Turbie (FR)
(74) Representative: Cantaluppi, Stefano

(57) **Abstract**

An insect trap is described and comprises a chamber (4) for housing a lighting unit (5) attractive to insects, a device (6) with conductive grilles for killing the insects attracted into the chamber (4), and a container (13) associated releasably with the chamber (4) and in communication therewith for collecting the insects killed by the device (6) and deposited in the container (13) by falling.

## Description

The present invention relates to an insect trap according to the preamble to the main claim.

In the present context, the term "trap" is intended to include devices provided for attracting, catching and killing insects such as mosquitoes, flies and the like.

Today, the need to eliminate or at least to reduce the presence of some insect species in typical areas of human activity, for example, in the agricultural world, in stock farming and, more generally, in all venues of social life such as swimming pools, campsites, gardens and similar environments, has stimulated the investigation and the implementation of many technical solutions for traps or devices for killing insects.

Typical amongst the solutions developed is a trap with a lighting unit attractive to insects, associated with a device with conductive grilles to which an electrical voltage is applied to kill the insect by burning as a result of its contact with the grilles. One of the disadvantages encountered in traps of this type is that the scattering and dropping of the remains of the insects burnt in contact with the grilles is not generally acceptable in environments in which an adequate standard of hygiene has to be maintained, for example, in all outdoor refreshment areas or in domestic gardens.

A principal object of the present invention is to provide an insect trap which is designed structurally and functionally to overcome the disadvantages discussed with reference to the prior art mentioned, at the same time improving its efficiency and practicality of use.

Another object of the invention is to achieve easier and quicker cleaning of the trap by the user.

Another object is to increase the versatility of these traps in order to achieve equal efficiency in killing insects of different species and kinds.

Another object is to improve the level of safety of these traps for their outdoor use in very varied environmental conditions, particularly in damp environments.

Yet another object is to provide a trap which, as well as achieving the objects set out above, can be produced in a constructionally simplified manner and at low cost.

These objects and others described in detail below are achieved by an insect trap formed in accordance with the appended claims.

The characteristics and the advantages of the invention will become clearer from the following detailed description of two preferred embodiments thereof, described by way of non-limiting example with reference to the appended drawings, in which:
- Figure 1 is a partially-sectioned, perspective view of a first embodiment of an insect trap according to the present invention,

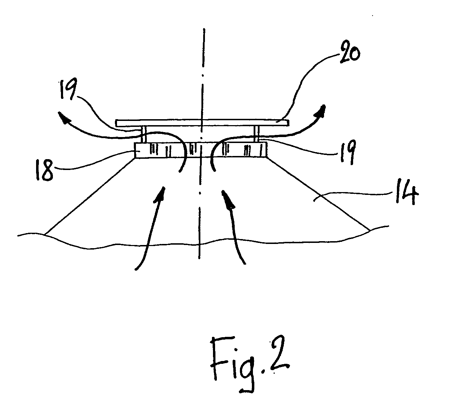

- Figure 2 is a side elevational view showing a detail of the invention indicated by the arrow A in Figure 1, on an enlarged scale, and
- Figure 3 is a partially-sectioned, front elevational view of a second embodiment of a trap according to the invention.

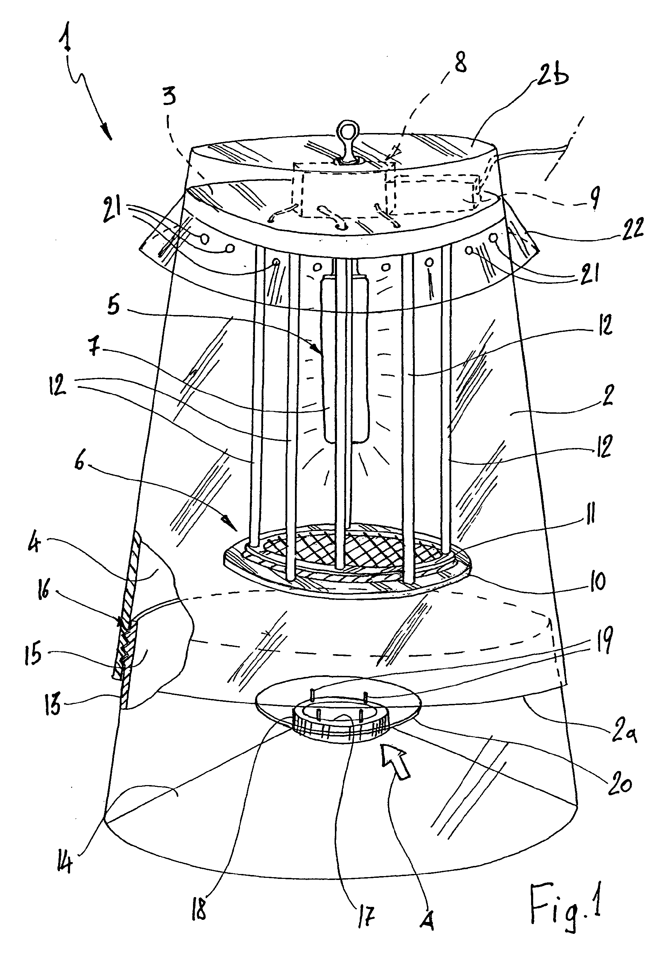

With initial reference to Figure 1, a first embodiment of an insect trap formed in accordance with the present invention is generally indicated 1.

The trap 1 comprises a substantially bell-shaped body 2 with an open end 2a and an opposite end 2b. Starting from the end 2b, the body 2 defines a technical compartment 3 and, separated therefrom, a chamber 4 for housing a lighting unit 5 and a device 6 with conductive grilles for killing insects by burning. The lighting unit 5 comprises a lamp 7 with a conventional lamp-holder, the light source thereof having the principal function of attracting insects.

The technical compartment 3 is closed from the exterior in a leaktight manner and is arranged for housing supply-circuit means 8 for the lamp 7 and for the device 6. In particular, the circuit means 8 comprise a voltage transformer 9, shown schematically in Figure 1, for providing a high-tension supply for the device 6 with conductive grilles.

The device 6 comprises a pair of grilles 10, 11 formed by conductive wires and supported in the chamber 4 by means of rod-shaped elements 12. Preferably, each grille 10, 11 has a circular outline and is supported by three rod-shaped elements 12 at least one of which constitutes a conductor for the high-tension supply of the grille. The grilles 10, 11 are coaxial with one another, are suspended in positions close to one another, and have different orientations of their conductive wires so that, together, they form a conductive grid of predetermined mesh.

For greater clarity of representation, the grilles 10, 11 as well as all of the components housed in the bell-shaped body 2, are shown in continuous outline rather than in broken outline in Figure 1.

The trap 1 also comprises a container 13 which is associated releasably with the bell-shaped body 2 at the end 2a and is in communication with the chamber 4 in order to collect the insects killed by the device 6, as will be explained further below. The container 13 comprises a base 14 from which a side wall 15 extends upwards. The container 13 is connected to the bell-shaped body 2 releasably by means of a male-and-female screw coupling 16 the respective threads of which are formed peripherally on the side walls of the body 2 and of the container 13.

The base 14 has a frusto-conical shape converging towards the chamber 4 and is perforated at its top, defining an opening 17. The opening is surrounded by a cylindrical projection 18 which extends towards the interior of the container and from which pin-like appendages 19 extend upwards to support an element 20 for covering the opening 17. The element 20 has a greater extent than the opening 17 in plan and is supported a predetermined distance from the opening so as to define a passageway for the insects into the chamber 4 but at the same time to prevent insects which are killed by the device 6 and which fall onto the floor of the container 13, from coming out of the container 13.

The bell-shaped body 2, as well as the container 13, are preferably made of plastics material and, in particular, of a plastics material including an ABS (acrylonitrile- butadiene-styrene) copolymer and additives such as to confer self-extinguishing properties on the material used. The plastics material selected for the production of the container also has characteristics of transparency to light and, moreover, is coloured so that the lamp 7 transmits a corresponding coloured light through the container and is therefore particularly attractive to insects.

The bell-shaped body 2 is made of an opaque plastics material so that the light, which is transmitted exclusively through the container, is concentrated in a lighting zone for attracting the insects in the region of the opening 17.

The container may also be made in different colours each of which is selected as being particularly attractive to a respective insect species.

A plurality of through-holes in the bell-shaped body 2, which are indicated 21, are in communication with the chamber 4 in order to discharge the fumes and emissions resulting from the burning of the insects by means of the device 6. Moreover, a deflector 22 extends from the bell-shaped body 2 with the function of a drip element for preventing infiltration of rainwater into the chamber 4, through the holes 21.

In a preferred embodiment, the deflector 22 is formed integrally with the compartment 3 and both are connected to the bell-shaped body 2 by screwing in a manner similar to that provided for the connection of the container 13 to the bell 2.

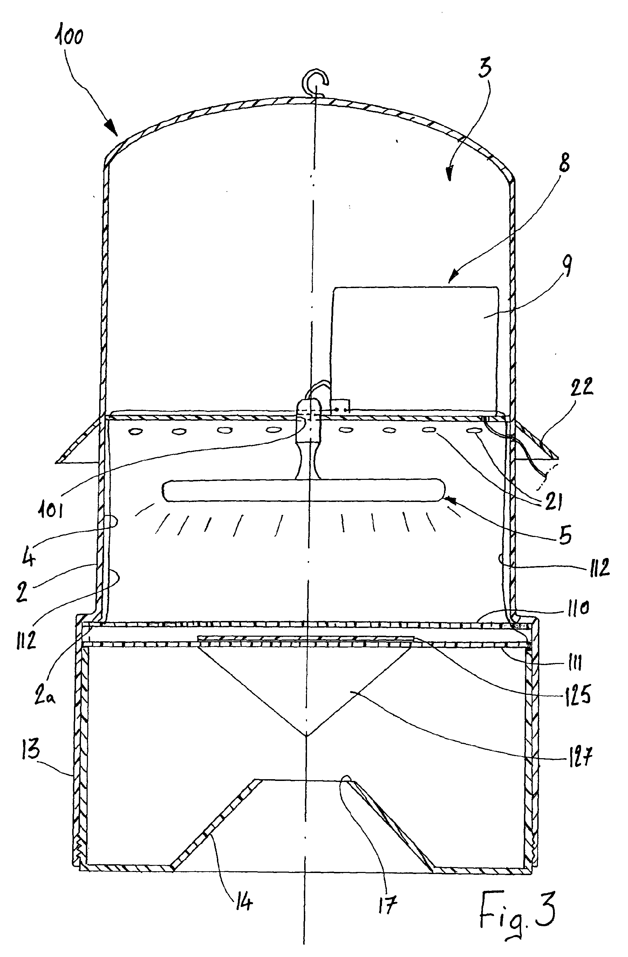

Figure 3 shows a second embodiment of the insect trap according to the invention, generally indicated 100, in which details similar to those of the previous embodiment are marked with the same reference numerals.

The trap 100 differs from that of the previous embodiment, in the first place, in that it has a (leaktight) technical compartment 3 of greater axial extent so as to house the circuit means 8 and the transformer 9 easily without interfering with a central hole 101 provided for the mounting of the lamp-holder for the lamp 7.

The container 13 is connected to the bell-shaped body 2 by a male-and-female screw coupling and, at the end remote from the base 14, has means for releasably clamping a pair of parallel and spaced-apart grilles 110, 111. Electrical conductors 112 are provided for the electrical connection of the grilles to the circuit means 8.

The grilles 110, 111 are formed by conductive grids preferably having meshes of different sizes. In particular, the upper grille 111 with a closer mesh prevents insects from passing into the chamber 4. Moreover, the grilles are arranged to be held in abutment against a shoulder surface 2a of the bell-shaped body 2 by the container 13.

Arranged centrally between the grilles and coaxially relative to the container 13 is a plate-shaped element 125, preferably circular in plan, from the periphery of which appendages 126 project, all in the same direction, for the mounting of a conical element 127 which is inverted, that is, with its vertex facing toward the base 14.

As in the previous embodiment, the base 14 has a frusto-conical shape terminating centrally in the opening 17 which thus faces the conical element 127 coaxially. The latter serves to prevent the remains of the insects burnt by the grilles falling out of the container 13 through the opening 17.

The container 13 and the conical element 127 are also preferably made of transparent and coloured plastics material the colour of which is selected according to its specific attractiveness to a certain type of insect.

The invention thus achieves the objects proposed, affording many advantages over known solutions.

A first advantage lies in the fact that, the releasable connection of the lower container to the bell-shaped body permits easier and quicker cleaning of the trap.

Another advantage is that the provision of containers made of transparent material of different colours increases the efficiency of the trap in killing insects of different species and kinds.

Yet a further advantage is that the provision of leaktight sealing means between the technical compartment and the bell-shaped body achieves an improved level of safety of the trap for outdoor use in very varied environmental conditions, particularly in damp environments.

Not the least advantage is that the trap according to the invention can be produced with a constructionally simplified structure and at low cost.

## Claims

1. An insect trap comprising a chamber (4) for housing a lighting unit (5) attractive to insects and a device (6) with conductive grilles for killing the insects attracted into the chamber (4), **characterized in that** it comprises a container (13) associated releasably with the chamber (4) and in communication therewith for collecting the insects killed by the device (6) and deposited in the container (13) by falling.

2. A trap according to Claim 1 in which the container (13) comprises at least one opening (17) through which the insects can enter the chamber (4).

3. A trap according to Claim 2 in which the container (13) comprises a base (14) and a wall (15) extending upwards from the base, the opening (17) being formed in the base (14).

4. A trap according to one or more of the preceding claims in which male-and-female screw coupling means (16) are provided between the container (13) and the chamber (4) for the releasable connection of the container to the chamber.

5. A trap according to Claim 3 in which the base (14) has a frusto-conical shape, converging towards the chamber (4) and the insect-entry opening (17) is formed at the top of the base.

6. A trap according to Claim 5 in which an element (20) is provided for at least partially covering the opening (17), the element (20) being mounted inside the container (13), spaced from the opening (17), so as to allow the insects attracted to the trap to pass into the chamber (4) but to prevent the insects killed by the device from coming out.

7. A trap according to one or more of the preceding claims in which the container (13) is made of a material transparent to light.

8. A trap according to one or more of the preceding claims in which the container (13) is made of plastics material.

9. A trap according to Claim 8 in which the container (13) is made of coloured plastics material so that the lighting unit (5) transmits a corresponding coloured light through the container in order to attract the insects towards the trap.

10. A trap according to Claim 9 in which the container (13) may be made in different colours each of which is selected as being particularly attractive to a respective insect species.

11. A trap according to one or more of the preceding claims in which the chamber (4) is defined by a substantially bell-shaped body (2) on the open end (2a) of which the container (13) is mounted releasably.

12. A trap according to Claim 11 in which the body (2) is also made of plastics material.

13. A trap according to Claims 8 and 12 in which the plastics material of which the body (2) and the container (13) are made comprises an ABS (acrylonitrile-butadienestyrene) copolymer.

14. A trap according to Claim 8 or Claim 12 in which the plastics material is self-extinguishing.

15. A trap according to one or more of Claims 11 to 14 in which through-holes (21) are provided in the body (2) for the discharge, from the chamber, of fumes and emissions resulting from the burning of the insects by the device.

16. A trap according to one or more of the preceding claims in which the device comprises at least one pair of electrically conductive grilles (10, 11; 110, 111), the grilles being spaced apart and support means being provided for supporting the grilles inside the chamber.

17. A trap according to one or more of the preceding claims in which the lighting unit (5) comprises a tubular lamp.

18. A trap according to Claim 17 in which the grilles (10, 11; 110, 111) are supported in the chamber (4) in positions between the lamp and the insect-entry opening (17).

19. A trap according to Claim 11 in which a compartment (3) separate from the chamber (4) is defined in the bell-shaped body (2) for housing supply-circuit means for the lighting unit and for the device with conductive grilles.
